# EUROPEAN PATENT SPECIFICATION

(11) **EP 2 918 777 B1**
(45) Date of publication and mention of the grant of the patent: **26.10.2016**
(21) Application number: 15158684.9
(22) Date of filing: 11.03.2015
(51) Int. Cl.: F01D 5/14, F01D 25/16, F02K 1/09

(54) **Method for optimizing a vane to reduce noise**
Verfahren zur Optimierung eines Schaufels für Rauschreduzierung
Méthode d'optimisation d'une aube pour l'atténuation du bruit

(30) Priority: 11.03.2014 US 201414204983
(43) Date of publication of application: 16.09.2015
(73) Proprietor: United Technologies Corporation, Farmington, CT 06032 (US)
(72) Inventor: BALTAS, Constantine, Manchester, CT Connecticut 06040 (US); ATASSI, Oliver V., Longmeadow, MA Massachusetts 01106 (US)
(74) Representative: Bridge, Kerry Ann

(56) References cited:
- EP-A2- 0 837 247
- EP-A2- 1 247 938
- EP-A2- 2 410 165
- US-A1- 2002 048 510
- US-A1- 2006 257 238
- US-B1- 6 554 564

## Description

### BACKGROUND

The present disclosure relates to a gas turbine engine, and more particularly to an engine having an airflow structure that helps mitigate acoustic response to reduce total effective perceived noise level (EPNL).

Gas turbine engines which have an engine cycle modulated with a variable area fan nozzle (VAFN) provide a smaller fan nozzle exit area during cruise conditions and a larger fan nozzle exit area during take-off and landing conditions. The VAFN may generate noise as upstream turbulence interacts with the VAFN.

Fan exit guide vanes (FEGVs) are disposed in gas turbine engines downstream from a fan to de-swirl circumferentially flowing air discharged from the fan into an axial direction prior to the air flowing into a bypass flow duct. The FEGVs may generate noise as upstream turbulence generated by the fan interacts with the FEGVs.

US 2002/0048510 A1 describes a method of positioning arrays of stages of a turbine.

### SUMMARY

According to the present invention, a method for optimizing a vane to reduce noise according to claim 1 is provided.

### BRIEF DESCRIPTION OF THE DRAWINGS

The various features and advantages of this disclosure will become apparent to those skilled in the art from the following detailed description of the currently preferred embodiment. The drawings that accompany the detailed description can be briefly described as follows:
FIG. 1A is a general schematic partial fragmentary view of an exemplary gas turbine engine embodiment for use with the present disclosure;
FIG. 1B is a rear view of the engine;
FIG. 1C is a side view of the engine integrated with a pylon;
FIG. 1D is a rear perspective view of the engine integrated with a pylon;
FIG. 2A is a sectional side view of aVAFN in a closed position;
FIG. 2B is a sectional side view of the VAFN in an open position;
FIG. 3 is a sectional side view of the VAFN with an increased airfoil leading edge radius relative to a baseline configuration;
FIG. 4 is an expanded sectional side view of the VAFN with an increased airfoil leading edge radius relative to a baseline configuration radius of 0.05δ where δ is an upstream boundary layer thickness;
FIG. 5 is an expanded sectional side view of the increased airfoil leading edge radius relative to a baseline configuration; and
FIG. 6 is a schematic view of a geometric method to increase the airfoil leading edge radius relative to a baseline configuration.
FIG. 7 is a schematic view of an embodiment of a leading edge portion of a fan exit guide vane modified from a baseline configuration based on a velocity profile of a wake produced by a fan blade.
FIG. 8 is a schematic view of another embodiment of the leading portion edge of the fan exit guide vane modified from a baseline configuration based on a velocity profile of a wake produced by a fan blade.

### DETAILED DESCRIPTION

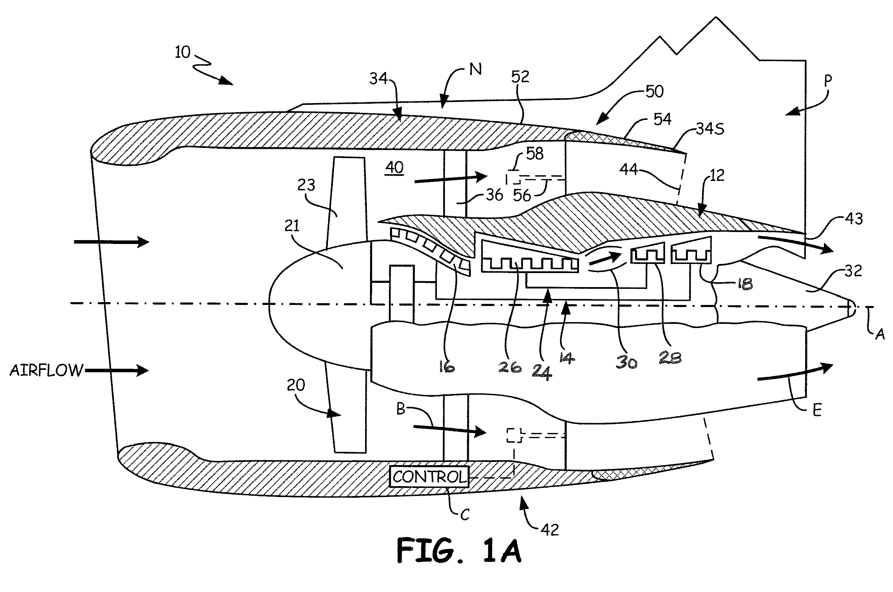

FIG. 1A illustrates a general partial fragmentary schematic view of gas turbofan engine 10 suspended from engine pylon P within engine nacelle assembly N as is typical of an aircraft designed for subsonic operation.

Turbofan engine 10 includes a core engine within core nacelle 12 that houses low spool 14 and high spool 24. Low spool 14 includes low pressure compressor 16 and low pressure turbine 18. Low spool 14 also drives fan section 20 either directly or through a gear architecture. Fan section 20 includes fan hub 21 and fan blades 23 mounted on fan hub 21. High spool 24 includes high pressure compressor 26 and high pressure turbine 28. Combustor 30 is arranged between high pressure compressor 26 and high pressure turbine 28. Low and high spools 14, 24 rotate about engine axis of rotation A. It should be understood, however, that this disclosure is applicable to various other gas turbine engines.

Airflow enters fan nacelle 34, which at least partially surrounds core nacelle 12. Fan section 20 communicates airflow into core nacelle 12 to power low pressure compressor 16 and high pressure compressor 26. Core airflow compressed by low pressure compressor 16 and high pressure compressor 26 is mixed with the fuel in combustor 30 and expanded over high pressure turbine 28 and low pressure turbine 18. Turbines 28, 18 are coupled for rotation with, respective, spools 24, 14 to rotationally drive compressors 26, 16 and fan section 20 in response to the expansion. Core engine exhaust E exits core nacelle 12 through core nozzle 43 defined between core nacelle 12 and tail cone 32.

Core nacelle 12 is supported within fan nacelle 34 by circumferentially spaced fan exit guide vanes (FEGVs) 36. Bypass flow path 40 is defined between core nacelle 12 and fan nacelle 34. Engine 10 generates a bypass flow arrangement with a bypass ratio in which substantial percent of the airflow which enters fan nacelle 34 becomes bypass flow B. The bypass flow B communicates through the generally annular bypass flow path 40 and is discharged from engine 10 through variable area fan nozzle (VAFN) 42 which defines nozzle exit area 44 between fan nacelle 34 and core nacelle 12 at fan nacelle end segment 34S of fan nacelle 34 downstream of fan section 20.

Thrust is a function of air density, velocity/acceleration, and air mass through the area. One or more of these parameters can be manipulated to vary the amount and direction of thrust provided by bypass flow B. VAFN 42 operates to effectively vary the area of fan nozzle exit area 44 to selectively adjust the pressure ratio of bypass flow B in response to controller C. Low pressure ratio turbofans are desirable for their high propulsive efficiency. However, low pressure ratio fans may be inherently susceptible to fan stability/flutter problems at low power and low flight speeds. VAFN 42 allows the engine to change to a more favorable fan operating line at low power, avoiding the instability region, and still provide the relatively smaller nozzle area necessary to obtain a high-efficiency fan operating line at cruise.

A significant amount of thrust is provided by bypass flow B due to the high bypass ratio. Fan section 20 of the engine 10 is preferably designed for a particular flight condition -- typically cruise at 0.8M and 35,000 feet (10668 m). As fan blades 23 within fan section 20 are efficiently designed at a particular fixed stagger angle for an efficient cruise condition, VAFN 42 is operated to effectively vary fan nozzle exit area 44 to adjust fan bypass air flow such that the angle of attack or incidence on fan blades 23 is maintained close to the design incidence for efficient engine operation at other flight conditions, such as landing and takeoff to thus provide optimized engine operation over a range of flight conditions with respect to performance and other operational parameters such as noise levels.

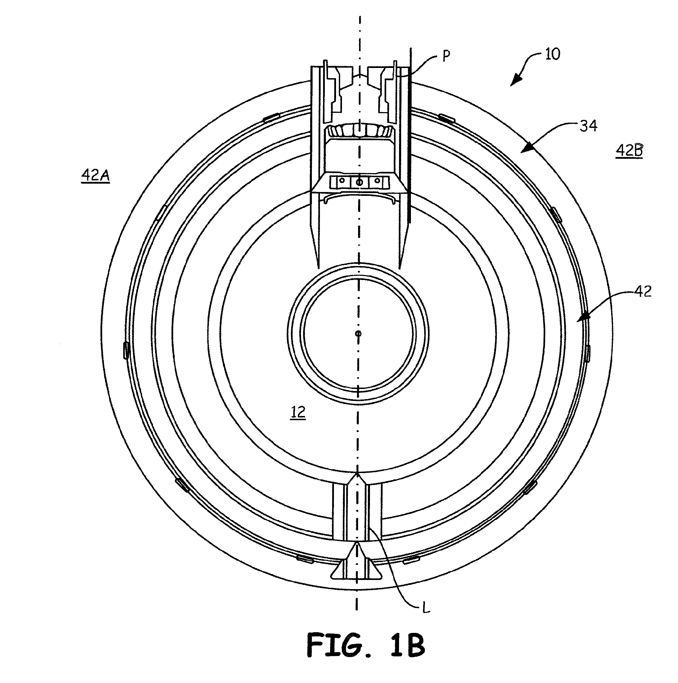

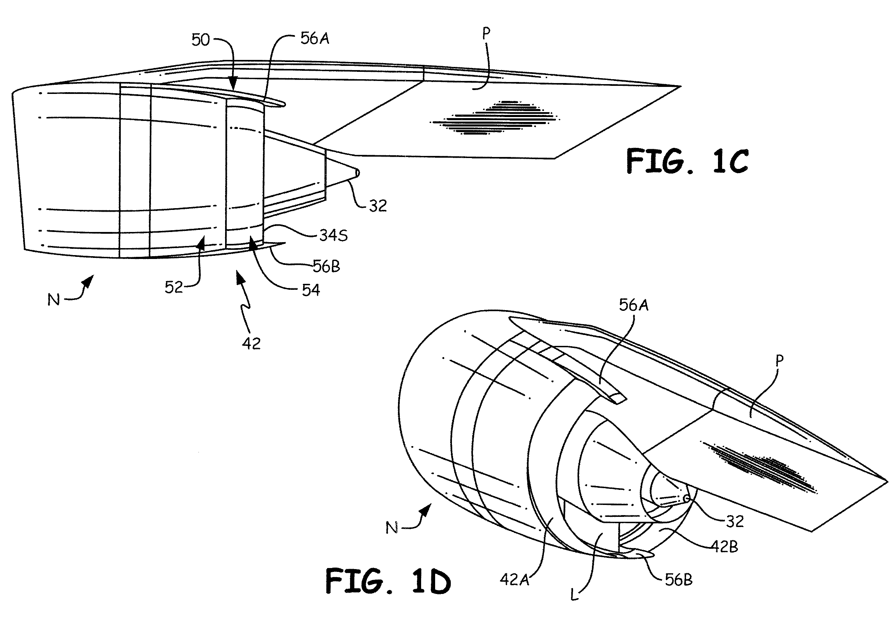

VAFN 42 may be separated into at least two sectors 42A-42B (FIG. 1B) defined between pylon P and lower Bi-Fi splitter L which typically interconnects a larger diameter fan duct reverser cowl and a smaller diameter core cowl (FIG. 1C and 1D). Each of at least two sectors 42A-42B are independently adjustable to asymmetrically vary fan nozzle exit area 44 to generate vectored thrust. It should be understood that although two segments are illustrated, any number of sectors and segments may alternatively or additionally be provided.

VAFN 42 generally includes auxiliary port system 50 having first fan nacelle section 52 and second fan nacelle section 54 movably mounted relative first fan nacelle section 52. Second fan nacelle section 54 axially slides along engine axis A relative fixed first fan nacelle section 52 to change the effective area of fan nozzle exit area 44. Second fan nacelle section 54, in one non-limiting embodiment, slides aftward upon track fairing 56A, 56B (illustrated schematically in FIG. 1C and 1D) in response to actuator 58 (illustrated schematically). Track fairing 56A, 56B extend from first fan nacelle section 52 adjacent respective pylon P and lower Bi-Fi splitter L (FIG. 1D).

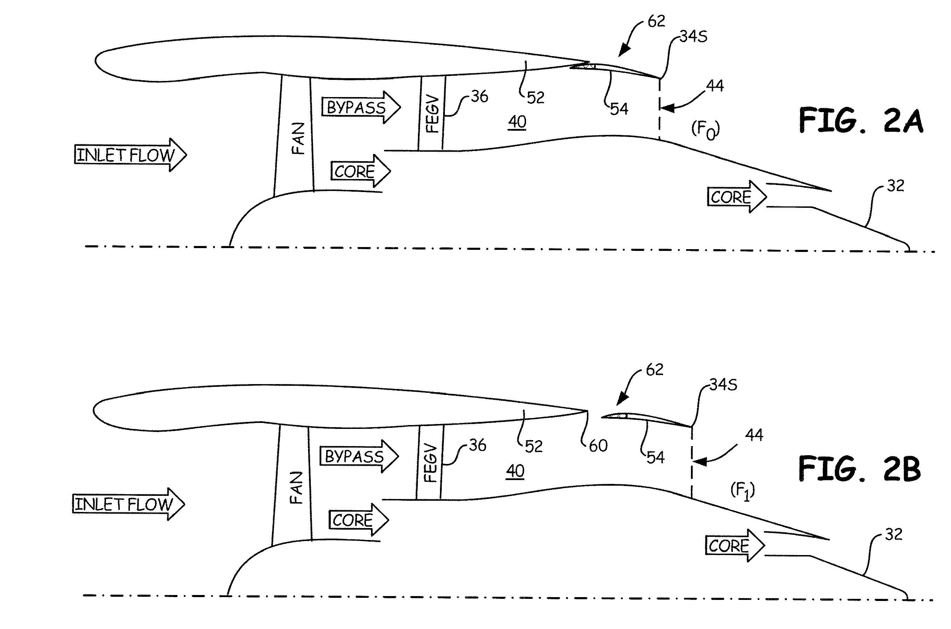

VAFN 42 changes the physical area and geometry of bypass flow path 40 during particular flight conditions. Bypass flow B is effectively altered by sliding of second fan nacelle section 54 relative first fan nacelle section 52 between a closed position (FIG. 2A) and an open position (FIG. 2B). Auxiliary port system 50 is closed by positioning second fan nacelle section 54 in-line with first fan nacelle section 52 to define fan nozzle exit area 44 as exit area F0 (FIG. 2A).

VAFN 42 is opened by moving second fan nacelle section 54 aftward along track fairing 56A, 56B away from first fan nacelle section 52 to open auxiliary port 60 (FIG. 2B) which extends between open second fan nacelle section 54 relative first fan nacelle section 52 to essentially provide an increased fan nozzle exit area 44 exit area F1. That is, exit area F1 with auxiliary port 60 (FIG. 2B) is greater than exit area F0 (FIG. 2A).

In one non-limiting embodiment, auxiliary port 60 is incorporated within bypass flow path 40 aft of fan exit guide vanes 36 (FEGVs). Auxiliary port 60 is located through the bypass duct outer wall. It should be understood that various forms of port arrangements are encompassed hereby.

In operation, VAFN 42 communicates with controller C to move second fan nacelle section 54 relative first fan nacelle section 52 of auxiliary port system 50 to effectively vary the area defined by fan nozzle exit area 44. Various control systems including an engine controller or an aircraft flight control system may also be usable with the present disclosure. By adjusting the axial position of the entire periphery of second fan nacelle section 54 in which all sectors are moved simultaneously, engine thrust and fuel economy are maximized during each flight regime by varying the fan nozzle exit area. By separately adjusting the sectors of second fan nacelle section 54 to provide asymmetrical fan nozzle exit area 44, engine bypass flow is selectively vectored to provide, for example only, trim balance, thrust controlled maneuvering, enhanced ground operations and short field performance.

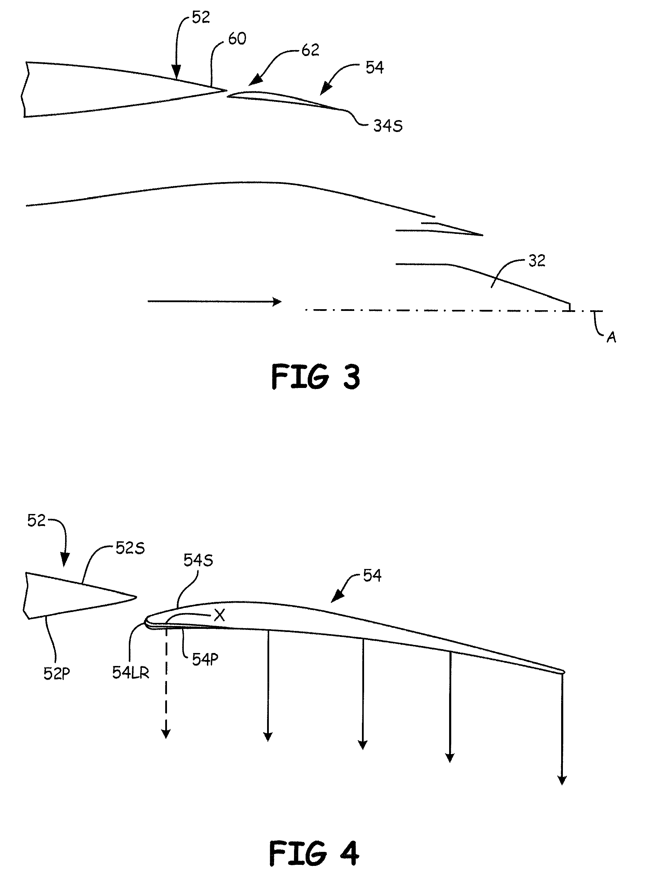

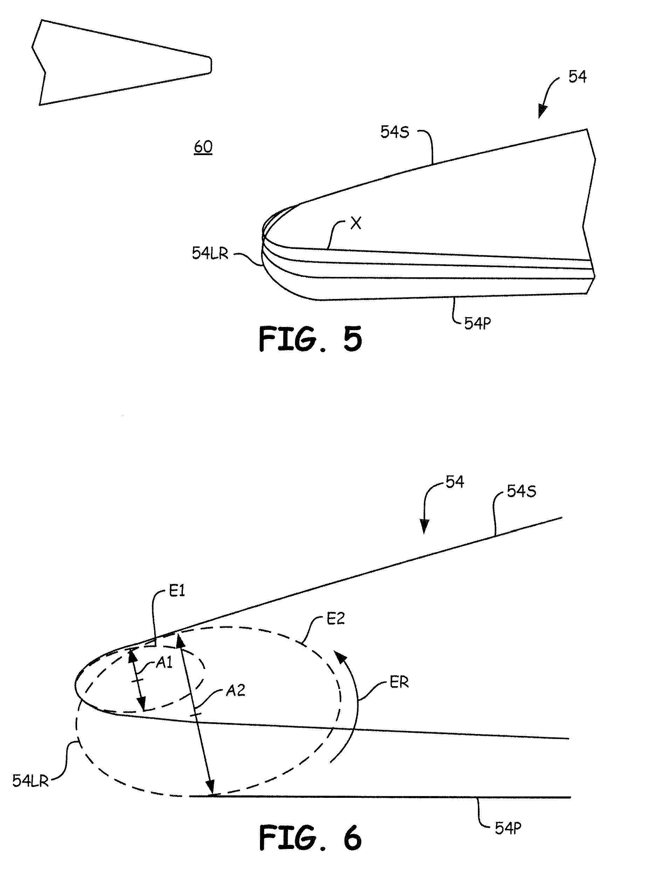

Referring to FIG. 3, second fan nacelle section 54 includes leading edge region 62 with an increased airfoil leading edge radius of approximately 0.1δ - 0.5δ relative to baseline configuration X. Baseline configuration X contemplates a chamfered or minor radiused leading edge in which baseline configuration X is approximately 0.05δ, where δ is an upstream boundary layer thickness (FIGS. 4 and 5).

Upstream turbulence has been determined to result from turbulent boundary layers which expand from the upstream fixed nacelle wall, turbulence which evolves from the upstream FEGV 36 wakes or endwall effects, and flow separation that may occur from the contour of the upstream fixed nacelle wall. The acoustic response of VAFN 42 is driven by a similar mechanism as that of airfoil turbulence ingestion leading edge noise. This source distribution is dipole in nature and may not exhibit a significant reduction in forward flight. This source behavior may lead to a significant sideline and aft angle contribution, thereby increasing the aircraft effective perceived noise level (EPNL).

In one non-limiting embodiment, suction surface 54S of second fan nacelle section 54 airfoil is held constant to maintain port exit flow area, as leading edge radius 54LR on pressure surface 54P is altered to provide increased airfoil leading edge radius 54LR relative baseline configuration X (FIG. 5). Increased airfoil leading edge radius 54LR in one non-limiting embodiment is confined to approximately the first quarter chord of second fan nacelle section 54, with changes to the immediate leading edge region 62 and relatively less deviation from baseline configuration X over the chordal distance toward trailing edge 34S. The change to pressure surface 54P is only affected over the first quarter (1/4) chord of the airfoil shape resulting in only a local limited induct area change with no impact to overall fan nozzle exit area. In a closed configuration, the increased leading edge creates a step height, which may increase induct losses. A balance may thereby be realized between this loss and the noise benefit, or pressure surface 52P of first fan nacelle section 52 should be modified to accommodate the increased airfoil leading edge. Through redefinition of pressure surface 54P to correspond with an increase in the airfoil leading edge radius relative to baseline configuration X, the total effective perceived noise level (EPNL) is reduced.

Referring to FIG. 6, to effectuate an increase in leading edge radius 54LR, elliptical contour E1 that defines the airfoil leading edge shape in baseline configuration X is increased along a semi-minor axis (A1 to A2) to define larger elliptical contour E2 then rotated (illustrated schematically by arrow ER) to align tangentially to suction surface 54S. This preserves much of the aerodynamic characteristics of baseline configuration X with only the overall thickness, i.e. height of elliptical contour's semi-minor axis (E1 to E2), being manipulated. VAFN 42 operates to increase fan nozzle exit area 44, however, port system 50 forms the bulk of the area increase. This increase in leading edge radius generally maintains overall nozzle exit area 44, but affects only the pressure surface of the leading edge region of port system 50.

The method disclosed herein has demonstrated considerable potential for leading edge noise reduction in the dominant frequency range of baseline airfoil shape X, for an increase of approximately 150% in leading edge radius 54LR. This noise reduction exhibits a non-linear dependency on the proximity of second fan nacelle section 54 to upstream first fan nacelle section 52 to provide an increased acoustic reduction as VAFN 42 moves toward the open position. Maximum leading edge radius 54LR may be constrained with regard to bypass flow B when VAFN 42 is in the closed position (FIG. 2A). That is, leading edge radius 54LR may be increased to a size which maximizes the reduction in boundary layer turbulence ingestion through port 60 but minimizes the impact on bypass flow B when VAFN 42 is in a closed position (FIG. 2B).

Flow properties of the ingested boundary layer, such as turbulence level, integral length scale, and Mach number, also play a role, however, based on fixed upstream conditions, a noise improvement upwards of 3dB in sound power level 3 can be expected at high Mach number, with further improvement attained at a low Mach number operations. With second fan nacelle section 54 in an open position, upwards of 5dB has been expected.

The method disclosed herein preserves an area of auxiliary port 60 as well as internal area distribution, as only a relatively minimal change to the airfoil mean camber is required to include both tone and broadband acoustic reductions. The change to pressure surface 54P is one affected over the first quarter (1/4) chord of the airfoil shape resulting in only a local limited induct area change with minimal impact to overall fan nozzle exit area. In a closed configuration, the increased leading edge creates a step height, which may increase induct losses. A balance may thereby be realized between this loss and the noise benefit.

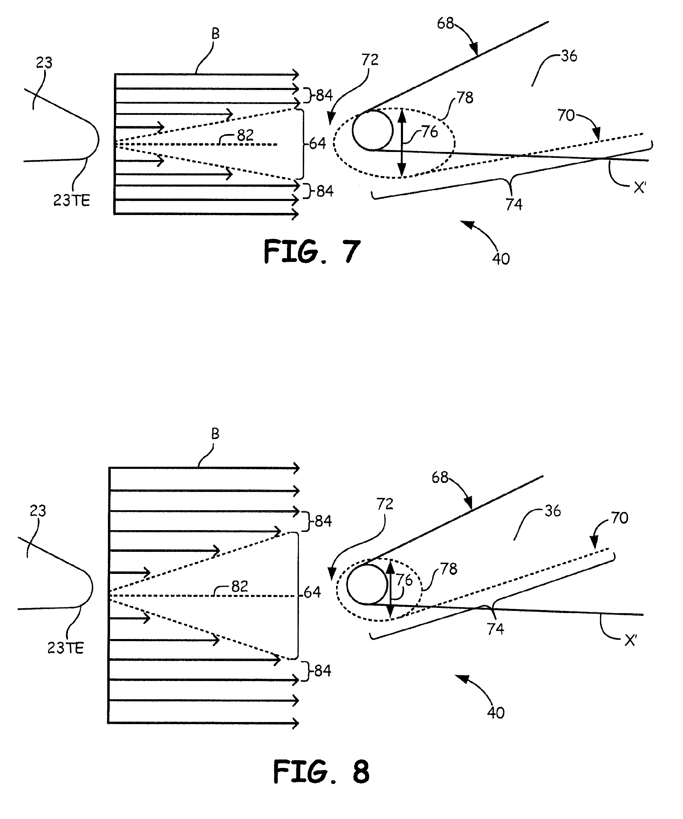

The present invention can be applied to many types of airflow structures beyond VAFN applications. Indeed, nearly any airfoil can include a leading edge configured according to the present disclosure, including upstream/downstream airfoil cascades in which the upstream cascade produces wakes or turbulence that may reach the downstream cascade. FIGS. 7-8 illustrate examples of an upstream rotor and downstream vane assembly with noise reduction. FIG. 7 is a schematic view of an embodiment of leading edge portion 72 of one of fan exit guide vanes (FEGVs) 36 modified from baseline configuration X'. FIG. 8 is a schematic view of another embodiment of leading edge portion 72 of one of fan exit guide vanes (FEGVs) 36 modified from baseline configuration X'. FEGVs 36 are disposed in bypass flow path 40 downstream from fan blades 23. Bypass flow B flows between fan blades 23 and FEGVs 36 and trailing edge 23TE of fan blades 23 produces wakes 64. As shown in FIGS. 7-8, FEGVs 36 include baseline configuration X', suction surface 68, pressure surface 70, and leading edge region 72. Leading edge region 72 of FEGVs 36 includes leading edge thickness 76 and elliptical contour 78. A portion of pressure surface 70 and a portion of elliptical contour 78 together form profile 74. Wake 64 includes velocity profile with wake centerline 82 and wake outer edges 84.

Similar to leading edge radius 54LR of VAFN 42 discussed above in the description of FIGS. 4-6, pressure surface 70 and leading edge region 72 of FEGVs 36 can be modified from baseline configuration X' of FEGVs 36 to reduce noise generated by the interaction between leading edge region 72 of FEGVs 36 and wakes 64 created by fan blades 23. Baseline configuration X' of FEGVs 36 can be an aerodynamic configuration of FEGVs 36 that is generally produced in a design phase of FEGVs 36 before acoustic properties and performance of FEGVs 36 are considered or finalized by a designer of FEGVs 36. As shown in FIGS. 7-8, baseline configuration X' is represented as solid lines on FEGVs 36. Similar to leading edge radius 54LR of VAFN 42 discussed above in the description of FIGS. 4-6, leading edge region 72 of FEGVs 36 can be represented as elliptical contour 78. Elliptical contour 78 of leading edge region 72 joins suction surface 68 and pressure surface 70. Leading edge thickness 76 deviates from baseline configuration X' and can be based on a thickness of wake 64. The thickness of wake 64 is the distance between wake outer edges 84 in a generally circumferential direction. Wake outer edges 84 are each defined in one embodiment as where a velocity wake 64 is approximately equal to 99 percent of a free stream flow velocity of bypass flow B. Leading edge thickness 76 of FEGVs 36 can be approximately half as thick to one times as thick as the thickness of wake 64. In the embodiments of FIGS. 7-8, leading edge thickness 76 defines a minor axis of elliptical contour 78. Similar to the embodiment of VAFN 42 shown in FIG. 4, a portion of pressure surface 70 deviates from baseline configuration X' to accommodate for increasing leading edge thickness 76.

The portion of pressure surface 70 that deviates from baseline configuration X' and a portion of elliptical contour 78 of leading edge region 72 together form profile 74. Similar to the embodiment of VAFN 42 shown in FIG. 4, profile 74 extends from leading edge region 72 downstream and across approximately a first quarter of a chord of one of FEGVs 36. Approximately after the first quarter of the chord of FEGV 36, profile 74 can transition to a pressure surface of baseline configuration X'. From leading edge region 72 to approximately after the first quarter of the chord of FEGV 36, profile 74 on pressure surface 70 can deviate from baseline configuration X' in a direction substantially parallel to a portion of velocity profile of wake 64 before transitioning into baseline configuration X'. As shown in FIGS. 7 and 8, profile 74 is parallel to the portion of velocity profile of wake 64 defined between wake centerline 82 and one of wake outer edges 84.

While profile 74 deviates a portion of pressure surface 70 from baseline configuration X', suction surface 68 of FEGV 36 is maintained at baseline configuration X'. As profile 74 extends from leading edge region 72 across the first quarter of the chord of FEGV 36, profile 74 reduces a thickness gradient between suction surface 68 and pressure surface 70 proximate leading edge region 72 relative baseline configuration X' of FEGV 36. By reducing the thickness gradient between suction surface 68 and pressure surface 70 proximate leading edge region 72, profile 74 reduces a volumetric strain experienced by wake 64 as wake 64 interacts with leading edge region 72 relative to a volumetric strain that wake 64 would experience from interacting with a leading edge according to baseline configuration X'. Noise generated by the interaction between wake 64 and leading edge region 72 of FEGV 36 is directly related to the volumetric strain wake 64 experiences as it interacts with leading edge region 72, reducing the volumetric strain experienced by wake 64 reduces the noise generated during the interaction. Decreasing the noise generated by the interaction of FEGV 36 with wake 64 from fan blades 23 can help decrease aircraft effective perceived noise level (EPNL). Because profile 74 only extends approximately across the first quarter of the cord of FEGV 36, profile 74 does not significantly impact a flow area across FEGV 36 in bypass flow path 40.

As demonstrated by the differences between the embodiment in FIG. 7 and the embodiment of FIG. 8, the thickness of wake 64 may increase or decrease depending upon performance parameters selected in the design of fan blades 23. Fan blade count and fan rotor speeds are some performance parameters that may affect the thickness of wake 64. In the embodiments of FIGS. 7 and 8, gas turbofan engine 10, shown in FIG. 1, comprises approximately 20 to 50 FEGVs 36 and approximately 14 to 22 fan blades that generate flow speeds of approximately Mach 0.3 - 0.75 across FEGVs 36. Because leading edge thickness 76 and profile 74 of FEGVs 36 are based on the thickness of wakes 64, leading edge thickness 76 and profile 74 can be adjusted as the thickness of wakes 64 changes due to changes in the performance parameters of fan blades 23.

In view of the foregoing description, it will be recognized that the present disclosure provides numerous advantages and benefits. For example, the present disclosure provides fan exit guide vanes (FEGV) 36 with leading edge region 72 and profile 74 on pressure side 70. Leading edge region 72 and profile 74 can help reduce the noise generated by the interaction between FEGV 36 and wakes 64 caused by fan blades 23. Leading edge region 72 and profile 74 can help reduce the noise without significantly affecting the flow area across bypass flow path 40.

### Discussion of Possible Embodiments

In one embodiment, a method for optimizing a vane to reduce noise generated by airflow between the vane and a blade disposed upstream from the vane includes first establishing an aerodynamic configuration of the vane as a baseline configuration of the vane.

The method further comprises determining a velocity profile of the wake in the airflow produced by a trailing edge of the blade as the airflow flows between blade and vane, wherein the velocity profile of the wake extends between the trailing edge of the blade and the leading region of the vane and adjusting a profile of a pressure surface of the vane proximate the leading edge region of the vane relative the baseline configuration such that the profile of the pressure surface proximate the leading edge region is substantially parallel to at least a portion of the velocity profile of the wake, wherein the portion of the velocity profile of the wake is defined between a centerline of the wake to an outer edge of the wake, the outer edge of the wake defined where a velocity of the wake is approximately equal to 99 percent of a free stream flow velocity of the airflow.

The profile may deviate from a pre-established aerodynamic configuration of the vane, and the profile reduces a thickness gradient between the suction surface and the pressure surface proximate the leading edge region relative the pre-established aerodynamic configuration of the vane.

The profile may reduce a volumetric strain of the wake relative the pre-established aerodynamic configuration of the vane.

The thickness of the leading edge region of the vane may be adjusted to be approximately half as thick to one times as thick as the thickness of the wake.

The method may further comprise maintaining a profile of a suction surface of the vane at the baseline configuration.

The method may further comprise transitioning the profile of the pressure surface of the vane to a pressure surface of the baseline configuration downstream from the leading edge region at approximately one quarter of a chord of the vane.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. For example, while the specification describes leading edge region 72 and profile 74 as being part of fan exit guide vane (FEGV) 36, leading edge region 72 and profile 74 may be incorporated into a compressor vane, an exit vane, a turbine vane or other airfoil or airflow structure without departing from the essential scope of the invention. Therefore, it is intended that the invention not be limited to the particular embodiment(s) disclosed, but that the invention will include all embodiments falling within the scope of the appended claims.

## Claims

1. A method for optimizing a vane (36) to reduce noise generated by an airflow (B) between the vane (36) and a blade (23) disposed upstream from the vane (36), the method comprising:
establishing an aerodynamic configuration of the vane (36) as a baseline configuration of the vane (36);
determining a velocity profile of a wake (64) in the airflow (B) produced by a trailing edge (23TE) of the blade (23) as the airflow (B) flows between blade (23) and vane (36), wherein the velocity profile of the wake (64) extends between the trailing edge (23TE) of the blade and a leading edge region (72) of the vane (36); and
adjusting a profile (74) of a pressure surface (70) of the vane (36) proximate the leading edge region (72) of the vane (36) relative the baseline configuration such that the profile (74) of the pressure surface (70) proximate the leading edge region (72) is substantially parallel to at least a portion of the velocity profile of the wake (64), wherein the portion of the velocity profile of the wake (64) is defined between a centerline (82) of the wake (64) to an outer edge (84) of the wake (64), the outer edge (84) of the wake (64) defined where a velocity of the wake is approximately equal to 99 percent of a free stream flow velocity of the airflow (B).

2. The method of claim 1, wherein the method further comprises:
determining a wake thickness of the wake (64) in the airflow produced by the blade (23); and
adjusting a leading edge thickness of the vane (36) relative the baseline configuration based on the wake thickness.

3. The method of claim 2, wherein the method further comprises:
adjusting the lead edge thickness of the vane (36) to be approximately half as thick to one times as thick as the thickness of the wake (64).

4. The method of claims 1 to 3, the method further comprising:
maintaining a profile of a suction surface (68) of the vane (36) at the baseline configuration.

5. The method of any of claims 1 to 4, the method further comprising:
transitioning the profile of the pressure surface (70) of the vane (36) to a pressure surface of the baseline configuration downstream from the leading edge region (72) at approximately one quarter of a chord of the vane (36).

6. The method of any of claims 1 to 5, wherein the method further comprises:
defining the leading edge region (72) of the vane (36) as an elliptical contour; and
defining the thickness of the leading edge region (72) by a minor axis of the elliptical contour.

## Patentansprüche

1. Verfahren zum Optimieren einer Schaufel (36) zum Reduzieren von Geräusch, das durch einen Luftstrom (B) zwischen der Schaufel (36) und einem Blatt (23) erzeugt wird, der stromaufwärts der Schaufel (36) angeordnet ist, wobei das Verfahren Folgendes umfasst:
Erstellen einer aerodynamischen Konfiguration der Schaufel (36) als Grundkonfiguration der Schaufel (36);
Bestimmen eines Geschwindigkeitsprofils einer Wirbelströmung (64) im Luftstrom (B), die durch eine Hinterkante (23TE) des Flügels (23) erzeugt wird, wenn der Luftstrom (B) zwischen Blatt (23) und Schaufel (36) strömt, wobei das Geschwindigkeitsprofil der Wirbelströmung (64) sich zwischen der Hinterkante (23TE) des Blatts und einer Vorderkantenregion (72) der Schaufel (36) erstreckt; und
Anpassen eines Profils (74) einer Druckfläche (70) der Schaufel (36) in der Nähe der Vorderkantenregion (72) der Schaufel (36) relativ zur Grundkonfiguration, derart, dass das Profil (74) der Druckfläche (70) in der Nähe der Vorderkantenregion (72) im Wesentlichen parallel zu wenigstens einem Teil des Geschwindigkeitsprofils der Wirbelströmung (64) ist, wobei der Teil des Geschwindigkeitsprofils der Wirbelströmung (64) zwischen einer Mittellinie (82) der Wirbelströmung (64) bis zu einer Außenkante (84) der Wirbelströmung (64) definiert ist, wobei die Außenkante (84) der Wirbelströmung (64) definiert ist, wo eine Geschwindigkeit der Wirbelströmung etwa gleich 99 Prozent einer Strömungsgeschwindigkeit einer freien Strömung des Luftstroms (B) ist.

2. Verfahren nach Anspruch 1, wobei das Verfahren ferner umfasst:
Bestimmen einer Wirbelströmungsdicke der Wirbelströmung (64) in dem Luftstrom, der von dem Blatt (23) erzeugt wird; und
Anpassen einer Vorderkantendicke der Schaufel (36) relativ zur Grundkonfiguration auf Grundlage der Wirbelströmungsdicke.

3. Verfahren nach Anspruch 2, wobei das Verfahren ferner umfasst:
Anpassen der Vorderkantendicke der Schaufel (36) derart, dass sie etwa halb so dick bis einmal so dick wie die Dicke der Wirbelströmung (64) ist.

4. Verfahren nach den Ansprüchen 1 bis 3, wobei das Verfahren ferner umfasst:
Beibehalten eines Profils einer Ansaugfläche (68) der Schaufel (36) bei der Grundkonfiguration.

5. Verfahren nach den Ansprüchen 1 bis 4, wobei das Verfahren ferner umfasst:
Übergehenlassen des Profils der Druckfläche (70) der Schaufel (36) in eine Druckfläche der Grundkonfiguration stromabwärts von der Vorderkantenregion (72) bei etwa einem Viertel einer Blatttiefe der Schaufel (36).

6. Verfahren nach den Ansprüchen 1 bis 5, wobei das Verfahren ferner umfasst:
Definieren der Vorderkantenregion (72) der Schaufel (36) als einen elliptischen Umriss; und
Definieren der Dicke der Vorderkantenregion (72) durch eine Nebenachse des elliptischen Umrisses.

## Revendications

1. Procédé d'optimisation d'une aube (36), pour réduire le bruit produit par un flux d'air (B) entre l'aube (36) et une ailette (23) disposée en amont de l'aube (36), le procédé comprenant :
l'établissement d'une configuration aérodynamique de l'ailette (36) comme une configuration de référence de l'ailette (36) ;
la détermination d'un profil de vitesse d'un sillage (64) dans le flux d'air (B) produit par un bord de fuite (23TE) de l'ailette (23) quand le flux d'air (B) s'écoule entre l'ailette (23) et l'aube (36), le profil de vitesse du sillage (64) s'étendant entre le bord de fuite (23TE) de l'ailette et une zone à bord d'attaque (72) de l'aube (36) ; et
l'ajustement d'un profil (74) d'une surface de pression (70) de l'aube (36) à côté de la zone à bord d'attaque (72) de l'aube (36) par rapport à la configuration de référence, de sorte que le profil (74) de la surface de pression (70) à côté de la zone à bord d'attaque (72) est sensiblement parallèle à au moins une partie du profil de vitesse du sillage (64), la partie du profil de vitesse du sillage (64) étant défini entre une ligne centrale (82) du sillage (64) et un bord extérieur (84) du sillage (64), le bord extérieur (84) du sillage (64) étant défini là où une vitesse du sillage est à peu près égale à 99 % d'une vitesse d'écoulement libre de flux du flux d'air (B).

2. Procédé selon la revendication 1, le procédé comprenant en outre :
la détermination d'une épaisseur de sillage du sillage (64) dans le flux d'air produit par l'ailette (23) ; et
l'ajustement d'une épaisseur de bord d'attaque de l'aube (36) par rapport à la configuration de référence en fonction de l'épaisseur du sillage.

3. Procédé selon la revendication 2, le procédé comprenant en outre :
l'ajustement de l'épaisseur de bord d'attaque de l'aube (36) pour valoir entre environ la moitié de l'épaisseur et une fois l'épaisseur du sillage (64).

4. Procédé selon l'une quelconque des revendications 1 à 3, le procédé comprenant en outre :
la conservation d'un profil d'une surface d'aspiration (68) de l'ailette (36) en tant que configuration de référence.

5. Procédé selon l'une quelconque des revendications 1 à 4, le procédé comprenant en outre :
la transition du profil de la surface de pression (70) de l'aube (36) à une surface de pression de la configuration de référence en aval de la zone à bord d'attaque (72) à environ un quart d'une corde de l'aube (36).

6. Procédé selon l'une quelconque des revendications 1 à 5, le procédé comprenant en outre :
la définition de la zone à bord d'attaque (72) de l'aube (36) comme un contour elliptique ; et
la définition de l'épaisseur de la zone à bord d'attaque (72) par un axe mineur du contour elliptique.
